# EUROPEAN PATENT APPLICATION

(11) **EP 3 915 748 A1**
(43) Date of publication of application: **01.12.2021**
(21) Application number: 19915803.1
(22) Date of filing: 20.02.2019
(51) Int. Cl.: B29C 33/02, B29C 35/02

(54) **MOLD CONTAINER DEVICE, AND TIRE VULCANIZER**

(71) Applicant: Mitsubishi Heavy Industries Machinery Systems, Ltd., Kobe-shi, Hyogo 652-8585 (JP); BRIDGESTONE CORPORATION, Chuo-ku Tokyo 104-8340 (JP)
(72) Inventor: IWAMOTO Tomoyuki, Kobe-shi, Hyogo 652-8585 (JP); FUKUDA Hideki, Kobe-shi, Hyogo 652-8585 (JP); HINENO Yoshikatsu, Kobe-shi, Hyogo 652-8585 (JP); OKUDOMI Naoto, Tokyo 104-8340 (JP); HAJIKANO Akihiko, Tokyo 104-8340 (JP); FUKUI Takeshi, Tokyo 104-8340 (JP)
(74) Representative: Cabinet Beau de Loménie
(86) International application number: PCT/JP2019/006291
(87) International publication number: WO 2020/170357

(57) **Abstract**

A mold container device (20) includes a state switching mechanism (28) is switchable between a movement restricting state that restricts a segment (26) from moving in a radial direction (Dr) and a movable state that allows the segment (26) to move in the radial direction (Dr).

## Description

### [Technical Field]

The present invention relates to a mold container device and a tire vulcanizer.

### [Background Art]

Patent Document 1 and Patent Document 2 disclose a mold container device used for a tire vulcanization device. The mold container device disclosed in Patent Document 1 and Patent Document 2 includes a top plate that holds an upper sidewall mold, a lower plate that holds a lower sidewall mold, a segment that holds a tread mold, and an outer ring that holds the segment and moves the segment in a radial direction of a tire.

The mold container device disclosed in Patent Document 1 and Patent Document 2 is a self-locking container. The segment of the mold container device is sandwiched by a claw portion formed on the top plate and the lower plate when the mold (in other words, the container) is closed. By using such a self-locking container, it is possible to suppress the top plate and the lower plate from opening due to an internal pressure of a bladder in a vulcanization step without using a press device or the like.

### [Citation List]

### [Patent Documents]

[Patent Document 1] Japanese Unexamined Patent Application, First Publication No. 2008-126457
[Patent Document 2] Japanese Unexamined Patent Application, First Publication No. 2010-110945

### [Summary of Invention]

### [Technical Problem]

In the mold container device disclosed in Patent Documents 1 and 2, when the outer ring is lifted upward, the segment slides downward along an inclined surface of the outer ring. As a result, the segment is displaced outward in a radial direction.

However, when a raw tire is conveyed into the mold container and a vulcanized tire is conveyed out from the mold container, the outer ring, the segment, and the top plate, which are heavy objects, need to be lifted and lowered, so that a lifting and lowering device of the outer ring is increased in size.

The present invention has been made in view of the above circumstances, and an object of the present invention is to provide a mold container device and a tire vulcanizer capable of easily opening and closing a mold while suppressing an increase in size of a device for lifting and lowering an outer ring or the like.

### [Solution to Problem]

According to a first aspect of the present invention, the mold container device includes an upper sidewall mold, an upper plate, a lower sidewall mold, a lower plate, a plurality of tread molds, a plurality of segments, an outer ring, and a state switching mechanism. The upper sidewall mold forms a sidewall disposed on an upper side of sidewalls of a raw tire disposed in a posture in which an axis extends in an up-down direction. The upper plate holds the upper sidewall mold from above. The lower sidewall mold forms a sidewall disposed on a lower side among the sidewalls of the raw tire. The lower plate holds the lower sidewall mold from below. The tread molds are disposed side by side in a circumferential direction about the axis to form a tread portion disposed on an outer peripheral portion of the raw tire. The plurality of segments are disposed side by side in the circumferential direction to hold each of the plurality of tread molds from outside in a radial direction about the axis and are displaceable between a closed position on an inside in the radial direction about the axis and an open position on an outside in the radial direction. The outer ring has an inner peripheral surface that is inclined so as to increase in diameter toward the upper side, and the inner peripheral surface is disposed so as to be slidable up and down with respect to an outer surface in the radial direction of the segments. The state switching mechanism which is switchable between a movement restricting state that restricts the segment from moving in the radial direction and a movable state that allows the segment to move in the radial direction.

In the first aspect, the outer ring has the inner peripheral surface that is inclined so as to increase in diameter toward the upper side. Therefore, a strong frame for lifting the outer ring or the like, which are heavy objects, is not required. Further, in the first aspect, the state switching mechanism which is switchable between a movement restricting state that restricts the segment from moving in the radial direction and a movable state that allows the segment to move in the radial direction. For example, when the mold container device is lifted to change a shape of the tire which is subjected to the vulcanization step, the outer ring tends to be displaced downward by its own weight. However, since the state switching mechanism restricts the radial movement of the segment, it is also restricted that the outer ring is displaced downward. As a result, when the mold container device is lifted by a crane or the like, the outer ring is displaced downward by its own weight to suppress the segment from being opened. On the other hand, when the mold container device is opened to put in and take out the raw tire and the vulcanized tire, the segment can be displaced in the radial direction by the state switching mechanism. Therefore, the mold container device can be opened only by moving the outer ring downward.

Accordingly, it is possible to easily open and close the mold while suppressing the increase in size of the device for lifting and lowering the outer ring and the like.

According to the second aspect of the present invention, the state switching mechanism according to the first aspect may include an engagement hole forming portion, a through hole forming portion, and a pin member. The engagement hole forming portion forms an engagement hole provided in the segment and opened on the upper surface of the segment. The through hole forming portion passes through the upper plate and forms a through hole disposed directly above the engagement hole when the segment is in the closed position. The pin member is formed to be insertable and removable from the engagement hole through the through hole.

For example, in a case where the pin member is inserted into the engagement hole through the through hole, the segment can be suppressed from moving in the radial direction with respect to the upper plate. Further, by pulling out the pin member inserted into the engagement hole from an engagement hole, the segment can move in the radial direction with respect to the upper plate.

Accordingly, the state in which the segment is restricted from being displaced in the radial direction and the state in which the segment can be displaced in the radial direction can be easily switched by the state switching mechanism.

According to the third aspect of the present invention, the segment according to the first or second aspect may include an upper engaging portion and a lower engaging portion. When the upper engaging portion is displaced from the open position to the closed position, the upper engaging portion engages with the upper plate so that the segment is displaceable outward in the radial direction while restricting the displacement of the upper plate in a direction in which the axis extends. When the lower engaging portion is displaced from the open position to the closed position, the upper engaging portion engages with the lower plate so that the segment is displaceable outward in the radial direction while restricting the displacement of the lower plate in a direction in which the axis extends.

In the third aspect, the segment includes an engaging portion as the upper engaging portion. This makes it possible to obtain a so-called self-locking container in which the displacement of the upper plate and the lower plate in a direction in which the upper plate and the lower plate are separated from each other by the segment can be restricted at the closed position. Therefore, even in a case where the upper plate is lifted in the configuration in which the segment is displaced outward in a radial direction by the displacement of the outer ring downward, the outer ring is displaced downward by its own weight to suppress so-called self-lock from being released. As a result, it can be easily conveyed in units of the mold container device.

According to the fourth aspect of the present invention, the tire vulcanizer is a tire vulcanizer for vulcanizing the raw tire using the mold container device according to any one of the first to third aspects. This tire vulcanizer includes a bolster plate, a connection switching portion, and a switching operation portion. The bolster plate can be bonded to the upper plate. The connection switching portion is provided on the bolster plate and is switchable between a connected state where the bolster plate is connected to the state switching mechanism in a state where the bolster plate is connected to the upper plate and an unconnected state where the bolster plate is not connected to the state switching mechanism. The switching operation portion is capable of displacing the state switching mechanism between the movement restricting state and the movable state when the connection switching portion is in the connected state.

In this fourth aspect, the state switching mechanism can be made into the movable state by bringing the connection switching portion into the connected state in the state where the bolster plate is connected to the upper plate. Therefore, when the bolster plate is connected to the upper plate and the tire vulcanization step is performed, the mold can be easily opened and closed. On the other hand, when the mold container device is replaced, the state switching mechanism can be put into the movement restricting state, and the connection switching portion can be put into the unconnected state to separate the bolster plate from the upper plate. Accordingly, it is not necessary for an operator to manually change a position of the pin member, so that the load on the operator can be reduced.

According to the fifth aspect of the present invention, the connection switching portion according to the fourth aspect may include an electromagnet that can be connected to the state switching mechanism by a magnetic force.

With this configuration, it is possible to easily switch between the connected state and the unconnected state in the connection switching portion.

### [Advantageous Effects of Invention]

According to the mold container device and the tire vulcanizer, the mold can be easily opened and closed while suppressing the increase in size of the device for lifting and lowering the outer ring and the like.

### [Brief Description of Drawings]

Fig. 1 is a partially enlarged view of a tire vulcanizer according to the first embodiment of the present invention.
Fig. 2 is a top view of a mold container device according to the first embodiment of the present invention.
Fig. 3 is a view showing a state in which a state switching mechanism according to the first embodiment of the present invention is displaced from a movement restricting state to a movable state.
Fig. 4 is a view showing a state in which an outer ring is displaced downward in order to open the mold container device.
Fig. 5 is a view showing a state in which an upper plate of the mold container device is displaced upward.
Fig. 6 is a view showing a state when the mold container device is replaced.
Fig. 7 is a side view when a connection switching portion in the second embodiment of the present invention is in an unconnected state.
Fig. 8 is a side view when the connection switching portion is in a connected state.
Fig. 9 is a cross-sectional view of a connection switching portion along an IX-IX line of Fig. 8.

### [Description of Embodiments]

### (First Embodiment)

Hereinafter, a mold container device and a tire vulcanizer according to the first embodiment of the present invention will be described.

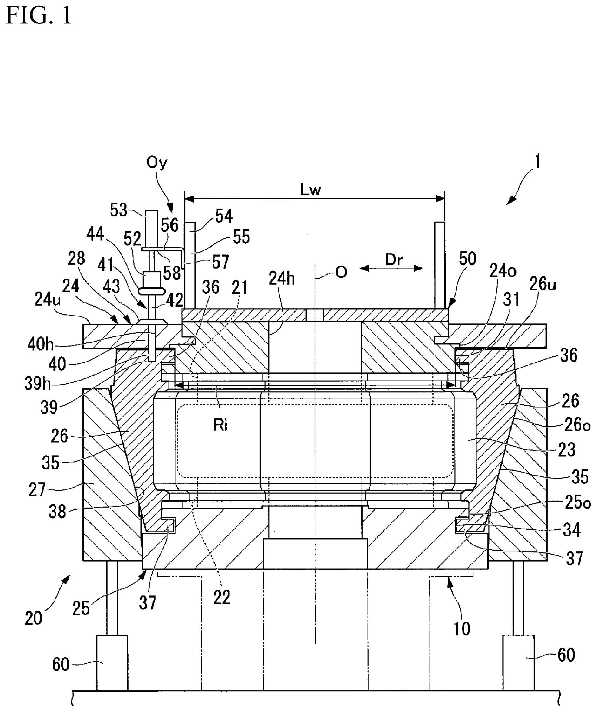

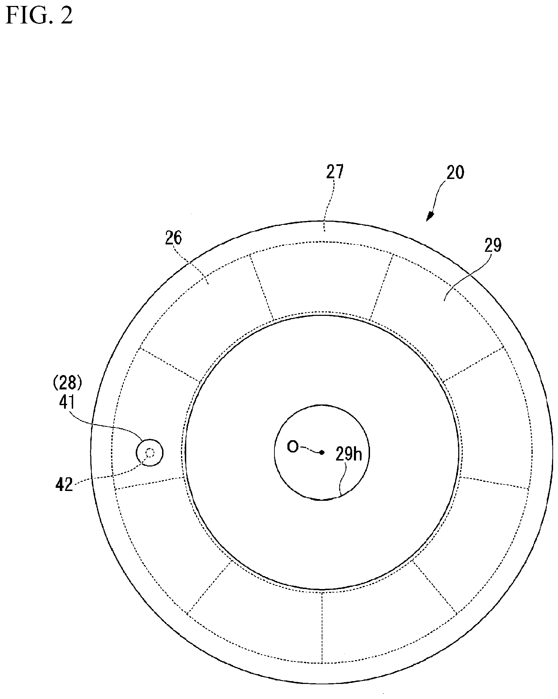

Fig. 1 is a partially enlarged view of the tire vulcanizer according to the first embodiment of the present invention. Fig. 2 is a top view of the mold container device according to the first embodiment of the present invention.

As shown in Fig. 1, a tire vulcanizer 1 includes a base portion 10, a mold container device 20, and a lifting and lowering device 50. The tire vulcanizer 1 vulcanizes and forms an unvulcanized tire (hereinafter, simply referred to as a raw tire; not shown). The tire vulcanizer 1 in the first embodiment performs a vulcanization forming step of the raw tire in a posture in which an axis O of the raw tire faces in an up-down direction.

The base portion 10 supports the mold container device 20 from below. The base portion 10 is provided with a fixing mechanism (not shown) for fixing the mold container device 20 and a center mechanism (not shown) having a bladder (not shown) for introducing a pressurized heating medium into the inside of the raw tire.

The mold container device 20 includes an upper sidewall mold 21, a lower sidewall mold 22, and a plurality of tread molds 23, each of which constitutes a mold. The mold container device 20 further includes an upper plate 24, a lower plate 25, a plurality of segments 26, an outer ring 27, and a state switching mechanism 28.

The upper sidewall mold 21 forms a sidewall disposed on an upper side of sidewalls of a raw tire disposed in a posture in which the axis O extends in an up-down direction.

The lower sidewall mold 22 forms a sidewall disposed on the lower side among the sidewalls of the raw tire.

The plurality of tread molds 23 form a tread portion disposed on an outer peripheral portion of the raw tire. The tread molds 23 are disposed side by side in a circumferential direction about the axis O.

The upper plate 24 holds the upper sidewall mold 21 from above. The upper plate 24 in the first embodiment has a circular outline when viewed from above and is formed in a flat plate shape having a circular hole 24h in a center. The above-described upper sidewall mold 21 is fixed and integrated with the upper plate 24.

The upper plate 24 has a circular outer peripheral surface 24o disposed so as to protrude downward. The outer peripheral surface 24o is formed with an upper recess portion 31 that is recessed toward the inside in the radial direction (hereinafter, simply referred to as a radial direction Dr) about the axis O. The upper recess portion 31 in the first embodiment is continuously formed on the entire circumference of the outer peripheral surface 24o.

The lower plate 25 holds the lower sidewall mold 22 from below. The lower plate 25 in the first embodiment has a circular outline when viewed from below and is formed in a flat plate shape having a circular hole 25h in a center. The lower sidewall mold described above is fixed and integrated with the lower plate 25.

The lower plate 25 has an outer peripheral surface 25o disposed so as to protrude upward. A lower recess portion 34 that is recessed toward the inside in the radial direction Dr is formed on the outer peripheral surface 25o. The lower recess portion 34 in the first embodiment is continuously formed on the entire circumference of the outer peripheral surface 25o.

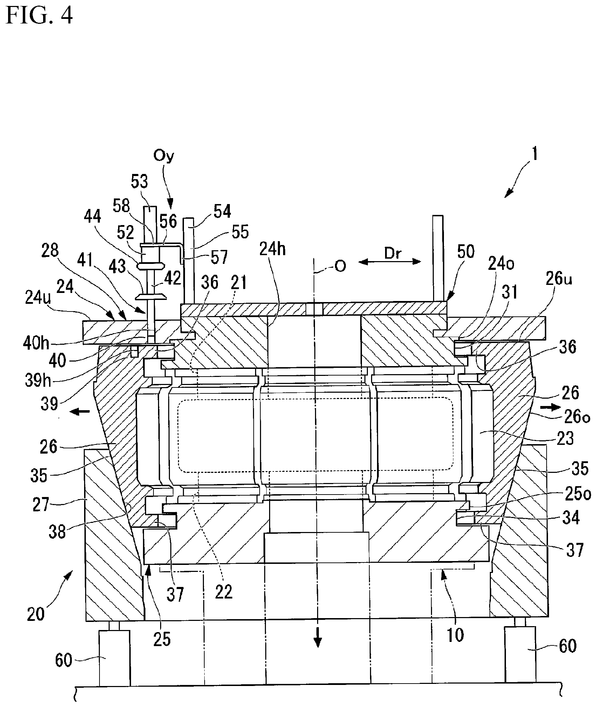

The plurality of segments 26 are disposed side by side in the circumferential direction about the axis O, and hold the plurality of tread molds 23 from the outside in the radial direction Dr. These plurality of segments 26 can be displaced between a closed position (refer to Fig. 1) on the inside in the radial direction Dr around the axis and an open position (refer to Fig. 4) on the outside in the radial direction Dr. In the plurality of segments 26 according to the first embodiment, segments 26 adjacent in the circumferential direction approach each other when the segments 26 are in the closed position. Therefore, the tread molds 23 adjacent in the circumferential direction come into contact with each other, and the inner peripheral surfaces of all the tread molds 23 are continuous.

On the other hand, the plurality of segments 26 are disposed outward in the radial direction Dr when the segments 26 are in the open position as compared with the closed position, and a gap expands between the segments 26 adjacent in the circumferential direction. The segment 26 showed in the first embodiment has an inclined surface 35 that is disposed outward in the radial direction Dr and increases in diameter toward an upper side. The inclined surface 35 in this embodiment is inclined at a constant angle.

Each of the plurality of segments 26 includes an upper engaging portion 36 and a lower engaging portion 37. The upper engaging portion 36 engages with the upper plate 24 (more specifically, the upper recess portion 31) when the segment 26 is displaced from the open position to the closed position. The lower engaging portion 37 engages with the lower plate 25 (more specifically, the lower recess portion 34) when the segment 26 is displaced from the open position to the closed position.

Each of the upper engaging portion 36 and the lower engaging portion 37 in the first embodiment protrudes inward from an upper end portion and a lower end portion of the segment 26 in the radial direction Dr. These upper engaging portions 36 are formed to be insertable and removable from the outside of the radial direction Dr with respect to the upper recess portion 31. When the upper engaging portion 36 is inserted into the upper recess portion 31, the displacement in the up-down direction of the upper plate 24 with respect to the segment 26 is restricted.

The lower engaging portion 37 is, like the upper engaging portion 36, formed to be insertable and removable from the outside in the radial direction with respect to the lower recess portion 34. When the lower engaging portion 37 is inserted into the lower recess portion 34, the displacement in the up-down direction of the lower plate 25 with respect to the segment 26 is restricted.

On the other hand, the upper engaging portion 36 can be displaced outward in the radial direction Dr with respect to the upper recess portion 31, and the lower engaging portion 37 can be displaced outward in the radial direction Dr with respect to the lower recess portion 34.

The outer ring 27 is formed in a ring shape about the axis O. The outer ring 27 has an inner peripheral surface 38 that is inclined so as to increase in diameter toward the upper side. The inner peripheral surface 38 disposed so as to be slidable up and down with respect to the outer surface 26o in the radial direction (in other words, the inclined surface 35) of the segment 26.

In the first embodiment, dovetail grooves or T-shaped T-grooves (neither of which is shown) extending up and down are formed in either the inner peripheral surface 38 of the outer ring 27 or the inclined surface 35 of the segment 26, and guide members (not shown) disposed inside the dovetail grooves or the T-grooves and sliding up and down are formed in either the outer ring 27 or the segment 26. The outer ring 27 and the segment 26 in the first embodiment are always slidable, and the inclined surface 35 and the inner peripheral surface 38 are maintained in contact with each other without being separated from each other.

In the first embodiment, the mechanism in which the dovetail groove or the T-groove and the guide member are combined has been described as an example, but any mechanism may be used as long as the outer ring 27 and the segment 26 are slidable and maintain contact without being separated from each other. The mold container device 20 is provided with a heating device such as a heater for heating the raw tire, but the drawing and description thereof will be omitted in the first embodiment.

The state switching mechanism 28 is configured to be switchable between a movement restricting state (refer to Fig. 1) for restricting movement of the segment 26 in the radial direction Dr and a movable state (refer to Fig. 4) for enabling movement of the segment 26 in the radial direction Dr. The state switching mechanism 28 in the first embodiment includes an engagement hole forming portion 39 provided in the segment 26, a through hole forming portion 40 provided in the upper plate 24, and a pin member 41.

The engagement hole forming portion 39 forms an engagement hole 39h that opens on the upper surface of the segment 26. The engagement hole forming portion 39 in the first embodiment is provided in each segment 26, but it may be provided in at least one segment 26.

The through hole forming portion 40 forms a through hole 40h passing through the upper plate 24. Specifically, the through hole forming portion 40 forms the through hole 40h disposed directly above the engagement hole 39h when the segment 26 is in the closed position. The through hole forming portion 40 in this embodiment forms one through hole 40h in the upper plate 24.

The pin member 41 is formed to be insertable and removable from the engagement hole 39h of one segment 26 through the through hole 40h. By disposing the pin member 41 so as to extend over the through hole 40h and the engagement hole 39h, the displacement of the segment 26 with respect to the upper plate 24 in the radial direction Dr is restricted. On the other hand, by pulling out the pin member 41 from the engagement hole 39h, the segment 26 can be displaced in the radial direction with respect to the upper plate 24. As shown in Fig. 2, only one pin member 41 is provided for one mold container device 20 as well as the through hole 40h.

The pin member 41 includes a pin main body portion 42, a first flange portion 43, and a second flange portion 44. The pin main body portion 42 is formed in a rod shape that can be inserted into the above-described through hole 40h and engagement hole 39h. Each of the first flange portion 43 and the second flange portion 44 is formed in a disk shape that extends toward the outside from an outer peripheral surface of the pin main body portion 42 in the radial direction Dr.

The first flange portion 43 is formed at a position where the pin main body portion 42 comes into contact with the upper surface 24u of the upper plate 24 when the pin main body portion 42 is inserted into the engagement hole 39h. The second flange portion 44 is disposed above the first flange portion 43 and is formed at the position of the upper end portion of the pin main body portion 42. The outer diameter of the first flange portion 43 and the outer diameter of the second flange portion 44 in the first embodiment are formed to be the same.

The lifting and lowering device 50 includes a bolster plate 51. The lifting and lowering device 50 is configured to be able to lift and lower the upper plate 24 and the upper sidewall mold 21. The lifting and lowering device 50 includes a coupling mechanism (not shown) capable of coupling the bolster plate 51 and the upper plate 24, a gripping device for gripping a vulcanized tire (not shown), and two hydraulic cylinders (not shown) for lifting and lowering the bolster plate 51. The two hydraulic cylinders (not shown) are disposed symmetrically about the axis O with the mold container device 20 sandwiched between them.

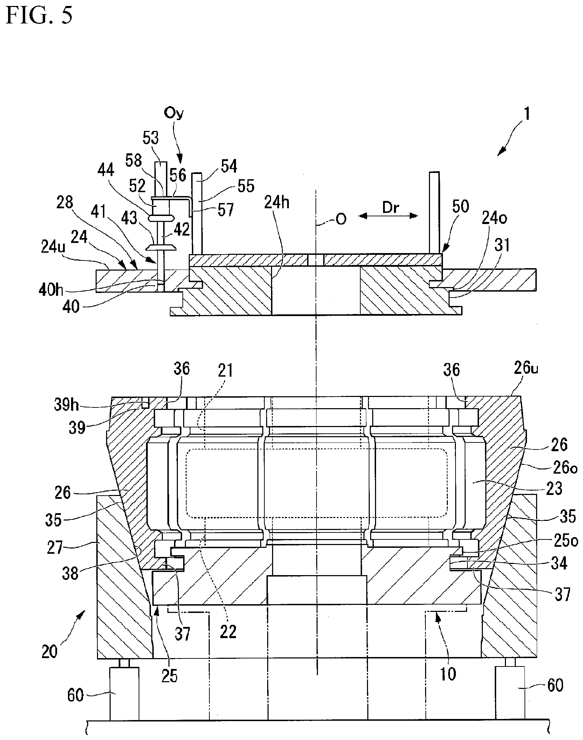

The bolster plate 51 is disposed in the vertical direction above the upper plate 24. The bolster plate 51 is formed so as to extend in a direction perpendicular to the axis O. The bolster plate 51 in the first embodiment is disposed over the upper end portions of two hydraulic cylinders (not shown). The bolster plate 51 is lifted and lowered between an open position (refer to Fig. 5) at which the mold container device 20 is opened and a closed position (refer to Fig. 1) at which the mold container device 20 is closed by the hydraulic cylinder (not shown) described above in a state in which the bolster plate 51 is coupled to the upper plate 24. Further, the bolster plate 51 is separated from the upper plate 24 and can be retracted when the mold container device 20 is replaced.

Fig. 1 shows a case where each of hydraulic cylinders (not shown) is disposed in front and back directions. In Fig. 1, a width Lw of the bolster plate 51 is smaller than an inner diameter Ri of an upper surface 26u disposed in an annular shape of the plurality of segments 26 disposed at the closed position.

The bolster plate 51 is provided with a switching operation unit Oy for switching the state of a state switching mechanism 28. The switching operation unit Oy in the first embodiment includes a connection switching portion 52, a switching operation portion 53, and a support frame portion 54. That is, the connection switching portion 52 and the switching operation portion 53 are provided on the bolster plate 51.

The connection switching portion 52 is switchable between a connected state connected to the state switching mechanism 28 and an unconnected state not connected to the state switching mechanism 28 in a state where the bolster plate 51 is coupled to the upper plate 24. The connection switching portion 52 in the first embodiment includes an electromagnet connectable to the state switching mechanism 28 by a magnetic force.

More specifically, the connection switching portion 52 is disposed vertically above the second flange portion 44 of the state switching mechanism 28, and can be connected to the second flange portion 44 by the magnetic force generated by the electromagnet. In addition, when the generation of the magnetic force by the electromagnet is stopped, the connection switching portion 52 is released from the connected state with respect to the second flange portion 44 and becomes an unconnected state.

The switching operation portion 53 is configured so as to displace the state switching mechanism 28 between a movement restricting position (movement restricting state) and a movable position (movable state) when the connection switching portion 52 is connected to the state switching mechanism 28. The switching operation portion 53 in the first embodiment includes an air cylinder that can be expanded and contracted in the extending direction of the pin main body portion 42. By expanding and contracting the air cylinder of the switching operation portion 53, the connection switching portion 52 is moved up and down. Here, a stroke amount of the air cylinder of the switching operation portion 53 in the first embodiment is slightly larger than the length of the engagement hole 39h. Therefore, even in a case where the air cylinder of the connection switching portion 52 is operated to the upper stroke end, a state in which the pin main body portion 42 of the state switching mechanism 28 is disposed in the through hole 40h is maintained. Each operation of the connection switching portion 52 and the switching operation portion 53 is controlled by a control unit (not shown).

The support frame portion 54 supports the connection switching portion 52 and the switching operation portion 53 described above. The support frame portion 54 of the first embodiment includes a frame main body portion 55 and a bracket portion 56. The frame main body portion 55 extends upward from the upper surface of the bolster plate 51. The bracket portion 56 includes a fixing portion 57 extending along the side surface of the frame main body portion 55 and fixed to the side surface, and a supporting portion 58 extending in a horizontal direction perpendicular to the fixing portion 57 to support the air cylinder. It is formed in an L-shape. The connection switching portion 52 described above is disposed vertically below the supporting portion 58.

The mold container device 20 and the tire vulcanizer 1 of the first embodiment have the above-described configurations. Next, the operation of the mold container device 20 and the tire vulcanizer 1 will be described. In the description of this operation, among the operations of the mold container device 20 and the tire vulcanizer 1, in particular, the opening / closing operation of the mold container device 20 when vulcanizing raw tires and the replacing operation of the mold container device 20.

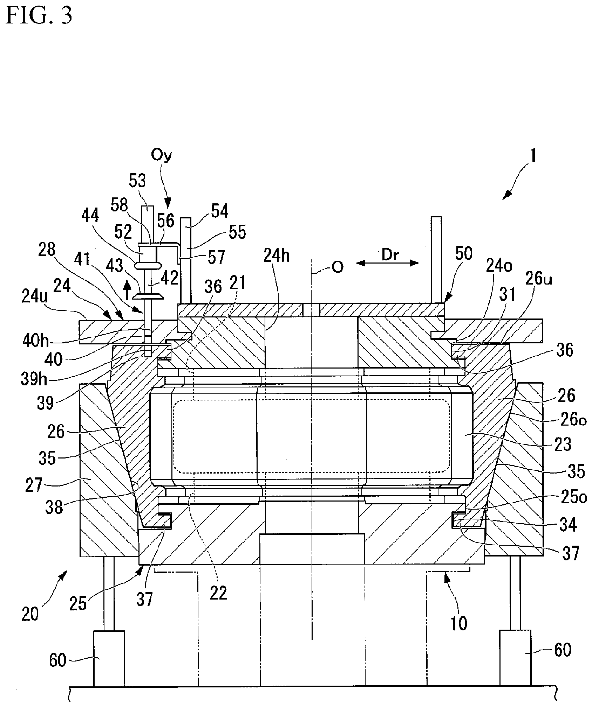

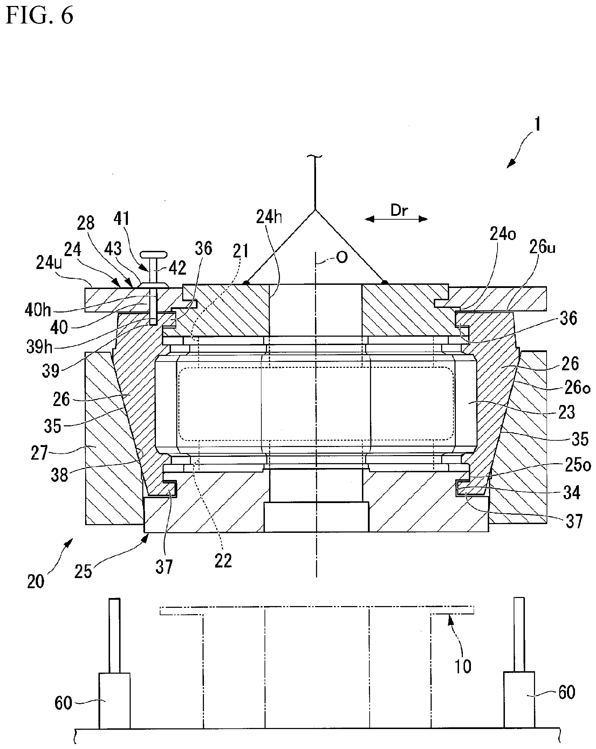

Fig. 3 is a diagram showing a state in which the state switching mechanism according to the first embodiment of the present invention is displaced from the movement restricting position to the movable position. Fig. 4 is a diagram showing a state in which the outer ring is displaced downward in order to open the mold container device. Fig. 5 is a diagram showing a state in which the upper plate of the mold container device is displaced upward. Fig. 6 is a diagram showing a state when the mold container device is replaced.

As shown in Fig. 3, first, when the mold container device 20 is installed on the base portion 10 of the tire vulcanizer 1, the mold container device 20 is opened in order to convey in the raw tires. Here, the lower plate 25 of the mold container device 20 is fixed to the base portion 10. Further, the bolster plate 51 is lowered by the lifting and lowering device 50, and the upper plate 24 is fixed to the bolster plate 51.

Next, a magnetic force is generated by the electromagnet of the connection switching portion 52 to connect the second flange portion 44 of the pin member 41 at the movement restricting position and the connection switching portion 52. Then, the switching operation portion 53 displaces the pin member 41 upward via the connection switching portion 52, and disposes the pin member 41 at a movable position. As a result, the segment 26 is in a movable state in which the segment 26 can be displaced outward in the radial direction Dr with respect to the upper plate 24.

After that, as shown in Fig. 4, when the outer ring 27 is lowered by the lifting and lowering device 60 such as a hydraulic cylinder provided in the tire vulcanizer 1, the inclined surface 35 of the segment 26 slides on the inner peripheral surface of the outer ring 27 to be lowered. In other words, the segment 26 moves outward in the radial direction Dr along the inclined surface 35 by moving upward relative to the outer ring 27. At this time, the upper engaging portion 36 of the segment 26 is displaced from the upper recess portion 31 outward in the radial direction Dr, and the lower engaging portion 37 is displaced from the lower recess portion 34 outward in the radial direction Dr. As a result, the self-lock of the mold container device 20 is released.

When the above-mentioned self-lock is released, the bolster plate 51 of the lifting and lowering device 50 is raised as shown in Fig. 5. As a result, the mold container device 20 is opened, and the raw tires can be conveyed into the mold container device 20. When the vulcanized tire is conveyed out from the mold container device 20, the mold container device 20 is opened in the same manner as the above-described operation.

On the other hand, when the mold container device 20 is replaced to change the shape, size, and the like of the tire to be vulcanized, as shown in Fig. 6, the bolster plate 51 is retracted by raising the bolster plate 51 in a state in which the mold container device 20 is closed. At this time, the connection switching portion 52 is not connected to the pin member 41 of the state switching mechanism 28. As a result, the pin member 41 is disposed at the movement restricting position inserted into the engagement hole 39h by its own weight.

After that, the connection between the base portion 10 and the lower plate 25 is released, and the upper plate 24 is lifted by an overhead crane or the like. At this time, the displacement of the segment 26 with respect to the upper plate 24 in the radial direction Dr is restricted. Therefore, the outer ring 27 cannot be lowered due to its own weight, and the self-lock is not released. The mold container device 20 lifted in such an integrated state is conveyed to a predetermined storage location and stored. The pin member 41 in the first embodiment is in a state of being inserted into the engagement hole 39h when the mold container device 20 is stored, but the pin member 41 may be removed when the mold container device 20 is stored.

### (Action and Effect of First Embodiment)

In the first embodiment described above, the outer ring 27 has the inner peripheral surface 38 that is inclined so as to increase in diameter toward the upper side. Therefore, the tire vulcanizer 1 does not need a strong frame for lifting the outer ring 27, the segment 26, and the upper plate 24, which are heavy objects.

Further, in the first embodiment, the mechanism 28 is provided which is switchable between a movement restricting state that restricts the segment 26 from moving in the radial direction Dr and a movable state that allows the segment 26 to move in the radial direction Dr. Therefore, since the state switching mechanism 28 restricts the movement of the segment 26 in the radial direction Dr, it is also restricted that the outer ring 27 is displaced downward. Therefore, when the mold container device 20 is lifted by a crane or the like, the outer ring 27 is displaced downward by its own weight to suppress the segment 26 from being opened.

On the other hand, when the mold container device 20 is opened to put in and take out the raw tire and the vulcanized tire, the state switching mechanism 28 makes it possible for the segment 26 to be displaced in the radial direction Dr. Therefore, the mold container device 20 can be opened only by moving the outer ring 27 downward. Therefore, it is possible to easily open and close the mold while suppressing the increase in size of the device for lifting and lowering the outer ring 27.

In the first embodiment, the state switching mechanism 28 includes an engagement hole forming portion 39, a through hole forming portion 40, and a pin member 41. Therefore, in a case where the pin member 41 is inserted into the engagement hole 39h through the through hole 40h, the segment 26 can be suppressed from moving in the radial direction Dr with respect to the upper plate 24. Further, by pulling out the pin member 41 inserted into the engagement hole 39h from the engagement hole 39h, the segment 26 can be moved in the radial direction Dr with respect to the upper plate 24. Accordingly, the state in which the segment 26 is restricted from being displaced in the radial direction Dr and the state in which the segment 26 can be displaced in the radial direction Dr can be easily switched by the state switching mechanism 28.

In the first embodiment, when the upper engaging portion 36 of the segment 26 is displaced from the open position to the closed position, the displacement in the extending direction of the axis O with respect to the upper plate 24 is restricted and the upper engagement portion 36 of the segment 26 is engaged with the upper plate 24 so as to be displacable outward in the radial direction Dr. Similarly, In the first embodiment, when the lower engaging portion 37 of the segment 26 is displaced from the open position to the closed position, the displacement in the extending direction of the axis O with respect to the lower plate 25 is restricted and the lower engaging portion 37 of the segment 26 is engaged with the lower plate 25 so as to be displacable outward in the radial direction Dr. Therefore, it is possible to make a so-called self-locking container in which it is possible to restrict the displacement of the upper plate 24 and the lower plate 25 in the direction in which the upper plate 24 and the lower plate 25 are separated from each other by the segment 26 at the closed position. Therefore, when the outer ring 27 is displaced downward and the segment 26 is displaced outward in the radial direction Dr, even in a case where the upper plate 24 is lifted, the outer ring 27 is displaced downward by its own weight to suppress so-called self-lock from being released. Therefore, it can be easily conveyed in units of the mold container device 20.

In the first embodiment, with the bolster plate 51 coupled to the upper plate 24, the connection switching portion 52 can be brought into a connected state, and the pin member 41 of the state switching mechanism 28 can be moved to a movable position. Therefore, when the bolster plate 51 is coupled to the upper plate 24 and the vulcanization step of the raw tire is performed, the mold container device 20 can be easily opened and closed. On the other hand, when the mold container device 20 is replaced, the pin member 41 of the state switching mechanism 28 can be put at the movement restricting position, and the connection switching portion 52 can be put into the unconnected state to separate the bolster plate 51 from the upper plate 24. Therefore, it is not necessary for the operator to manually change the position of the pin member 41, so that the load on the operator can be reduced.

In the first embodiment, the connection switching portion 52 further includes an electromagnet. Therefore, the connected state and the unconnected state of the connection switching portion 52 can be easily switched.

### (Second Embodiment)

Next, the second embodiment of the present invention will be described with reference to the drawings. Since this second embodiment differs from the first embodiment only in the configuration of the connection switching portion, the same parts as those of the first embodiment are designated by the same reference numerals, and duplicate description will be omitted.

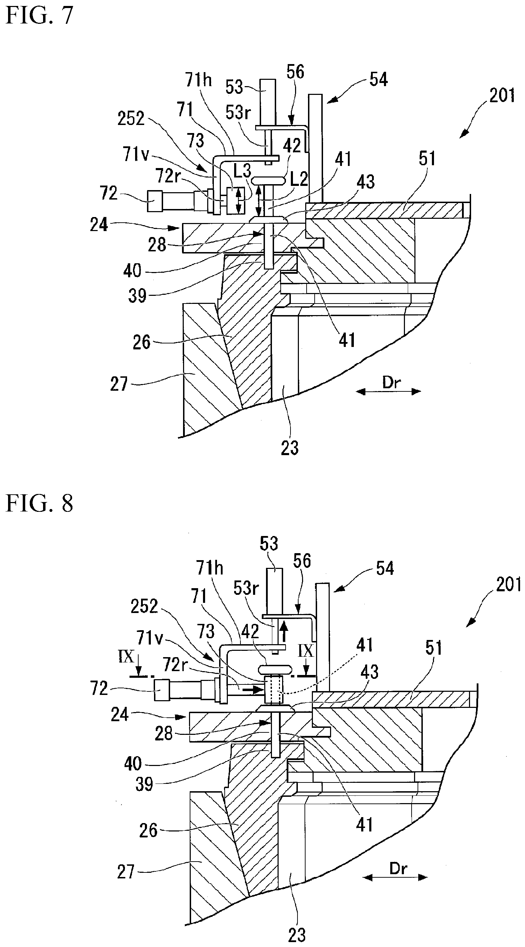

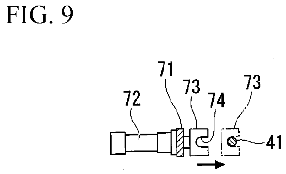

Fig. 7 is a side view of the case where the connection switching portion in the second embodiment of the present invention is in the unconnected state. Fig. 8 is a side view when the connection switching portion is in a connected state. Fig. 9 is a cross-sectional view of the connection switching portion along the IX-IX line of Fig. 8.

As shown in Fig. 7 and Fig. 8, a tire vulcanizer 201 according to the second embodiment includes the state switching mechanism 28 in the mold container device 20. The state switching mechanism 28 of the second embodiment has the same configuration as the state switching mechanism 28 of the first embodiment. That is, the state switching mechanism 28 is configured to be switchable between a movement restricting state that restricts the segment 26 from moving in the radial direction Dr and a movable state that allows the segment 26 to move in the radial direction Dr.

The state switching mechanism 28 includes an engagement hole forming portion 39 provided in the segment 26, a through hole forming portion 40 provided in the upper plate 24, and a pin member 41. The pin member 41 includes a pin main body portion 42, a first flange portion 43, and a second flange portion 44.

On the other hand, the bolster plate 51 is provided with a switching operation unit Oy for switching the state of the state switching mechanism 28. The switching operation unit Oy in the second embodiment includes a connection switching portion 252, a switching operation portion 53, and a support frame portion 54.

The connection switching portion 252 includes a switching bracket 71, a connection drive portion 72, and a groove forming portion 73.

The switching bracket 71 is connected to the lower end of the rod 53r of the air cylinder of the switching operation portion 53 and can be moved up and down by the switching operation portion 53. The switching bracket 71 in the second embodiment is formed in an L-shape in a side view consisting of a horizontal portion 71h extending horizontally from the lower end of the rod 53r and a vertical portion 71v extending vertically downward from an edge portion of the horizontal portion 71h.

The connection drive portion 72 is supported by the vertical portion 71v of the switching bracket 71. The connection drive portion 72 in the second embodiment is an air cylinder and can be expanded and contracted in the horizontal direction. The connection drive portion 72 can displace the groove forming portion 73 in the horizontal direction. In the connection drive portion 72, the rod 72r is exposed closer to the bolster plate 51 than the vertical portion 71v, and the groove forming portion 73 is fixed to the end portion of the rod 72r.

As shown in Fig. 7 and Fig. 9, the groove forming portion 73 forms a groove 74 capable of accommodating the pin main body portion 42 disposed between the first flange portion 43 and the second flange portion 44 among the pin members 41. The groove forming portion 73 extends in the up-down direction like the pin main body portion 42. In other words, the groove forming portion 73 has a length L3 slightly shorter than the length L2 of the pin main body portion 42 disposed between the first flange portion 43 and the second flange portion 44.

As shown in Fig. 9, the groove 74 formed by the groove forming portion 73 is open inside Dr in the radial direction. From the position shown in Fig. 7, the groove forming portion 73 approaches the pin main body portion 42 from the outside of the radial direction Dr by the connection drive portion 72, and the pin main body portion 42 can be accommodated in the groove 74 as shown in Fig. 8. The state in which the pin main body portion 42 is accommodated in the groove 74 corresponds to a connected state in which the connection switching portion 252 is connected to the state switching mechanism 28.

On the other hand, when the pin main body portion 42 shown in Fig. 8 is moved outward in the radial direction Dr by the connection drive portion 72 from the state in which the pin main body portion 42 is accommodated in the groove 74, the pin main body portion 42 can be separated from the groove 74 as shown in Fig. 7. The state in which the pin main body portion 42 is detached from the groove 74 in this manner corresponds to an unconnected state in which the connection switching portion 252 is not connected to the state switching mechanism 28.

In this second embodiment, the groove forming portion 73 can be moved up and down by the switching operation portion 53 in the connected state in which the pin main body portion 42 is accommodated in the groove 74. As shown in Fig. 8, when the groove forming portion 73 is displaced upward in the connected state in which the pin main body portion 42 is accommodated in the groove 74, the upper surface of the groove forming portion 73 presses the lower surface of the second flange from below. Then, the pin member 41 is displaced from the movement restricting position to the movable position.

On the other hand, in a case where the groove forming portion 73 in the connected state is displaced downward when the pin member 41 is in the movable position, the pin member 41 is displaced from the movable position to the movement restricting position, and the displacement of the segment 26 with respect to the upper plate 24 in the radial direction Dr is restricted.

In the second embodiment, the groove forming portion 73 is disposed at a position where the second flange portion 44 is not disposed in the vertical direction when the groove forming portion 73 is not connected by the connection drive portion 72. As a result, it is possible to prevent the groove forming portion 73 from interfering with the second flange portion 44 when the bolster plate 51 retracts upward.

Therefore, according to the second embodiment, it is possible to switch between a connected state in which the connection switching portion 252 is connected to the state switching mechanism 28 and a non-connected state in which the connection switching portion 252 is not connected, in particular, without using an electromagnet.

The present invention is not limited to the above-described embodiments and includes various modifications to the above-described embodiments without departing from the spirit of the present invention. That is, the specific shape, configuration, and the like given in the embodiment are merely examples and can be changed as appropriate.

For example, in each of the above-described embodiments, the case where the mold container device 20 is a self-locking container has been described. However, the mold container device 20 is not limited to the self-locking container.

The connection switching portions 52 and 252 are not limited to the configurations illustrated in the first embodiment and the second embodiment. Any configuration may be used as long as it can switch between the connected state and the unconnected state with respect to the state switching mechanism 28.

The case where the switching operation portion 53 and the connection drive portion 72 include an air cylinder has been illustrated, but the case is not limited to the air cylinder.

Although the case where the state of the state switching mechanism 28 is switched by the switching operation unit Oy has been described, the state of the state switching mechanism 28 may be switched by the operator inserting and removing the pin member 41 from the engagement hole.

In each embodiment, a case where the state switching mechanism 28 is configured by the engagement hole forming portion 39, the through hole forming portion 40, and the pin member 41 has been described. However, the state switching mechanism 28 may have any configuration as long as it is switchable between a movement restricting state for restricting movement of the segment 26 in the radial direction Dr and a movable state for enabling movement of the segment 26 in the radial direction Dr. For example, the upper plate 24 and the outer ring 27 may be clamped or bolted to indirectly restrict the segment 26 from moving in the radial direction Dr.

### [Industrial Applicability]

According to the mold container device and the tire vulcanizer, the mold can be easily opened and closed while suppressing the increase in size of the device for lifting and lowering the outer ring 27.

### [Reference Signs List]

- 1:: Tire vulcanizer
- 10:: Base portion
- 20:: Mold container device
- 21:: Upper sidewall mold
- 22:: Lower sidewall mold
- 23:: Tread mold
- 24:: Upper plate
- 25:: Lower plate
- 26:: Segment
- 27:: Outer ring
- 28:: State switching mechanism
- 31:: Upper recess portion
- 34:: Lower recess portion
- 35:: Inclined surface
- 36:: Upper engaging portion
- 37:: Lower engaging portion
- 38:: Inner peripheral surface
- 39:: Engagement hole forming portion
- 40:: Through hole forming portion
- 41:: Pin member
- 42:: Pin main body portion
- 43:: First flange portion
- 44:: Second flange portion
- 50:: Lifting and lowering device
- 51:: Bolster plate
- 52:: Connection switching portion
- 53:: Switching operation portion
- 54:: Support frame portion
- 55:: Frame main body portion
- 56:: Bracket portion
- 57:: Fixing portion
- 58:: Supporting portion
- 60:: Lifting and lowering device
- 71:: Switching bracket
- 72:: Connection drive portion
- 73:: Groove forming portion

## Claims

1. A mold container device comprising:
an upper sidewall mold that forms a sidewall disposed on an upper side among sidewalls of a raw tire disposed in a posture with an axis extending in an up-down direction;
an upper plate that holds the upper sidewall mold from above;
a lower sidewall mold that forms a sidewall disposed on a lower side among the sidewalls of the raw tire;
a lower plate that holds the lower sidewall mold from below;
a plurality of tread molds that are disposed side by side in a circumferential direction about the axis to form a tread portion that is disposed on an outer peripheral portion of the raw tire;
a plurality of segments that are disposed side by side in the circumferential direction to hold each of the plurality of tread molds from outside in a radial direction about the axis and are displaceable between a closed position on the inside in the radial direction about the axis and an open position on the outside in the radial direction;
an outer ring that has an inner peripheral surface inclined so as to increase in diameter toward an upper side, and the inner peripheral surface is disposed so as to be slidable up and down with respect to an outer surface in the radial direction of the segments; and
a state switching mechanism that is switchable between a movement restricting state for restricting movement of the segment in the radial direction and a movable state for enabling movement of the segment in the radial direction.

2. The mold container device according to Claim 1, wherein
the state switching mechanism includes
an engagement hole forming portion that is provided in the segment to form an engagement hole open on an upper surface of the segment,
a through hole forming portion that passes through the upper plate to form a through hole that is disposed directly above the engagement hole when the segment is at the closed position, and
a pin member that is formed to be insertable and removable from the engagement hole through the through hole.

3. The mold container device according to Claim 1 or 2, wherein
the segment includes
an upper engaging portion that, when the segment is displaced from the open position to the closed position, engages with the upper plate so that the segment is displaceable outward in the radial direction while restricting the displacement of the upper plate in a direction in which the axis extends, and
a lower engaging portion that, when the segment is displaced from the open position to the closed position, engages with the lower plate so that the segment is displaceable outward in the radial direction while restricting the displacement of the lower plate in a direction in which the axis extends.

4. A tire vulcanizer for vulcanizing a raw tire using the mold container device according to any one of Claims 1 to 3, the tire vulcanizer comprising:
a bolster plate that is coupled to the upper plate;
a connection switching portion that is provided on the bolster plate and is switchable between a connected state connected to the state switching mechanism in a state where the bolster plate is connected to the upper plate and an unconnected state not connected to the state switching mechanism; and
a switching operation portion that enables the state switching mechanism to be displaced between the movement restricting state and the movable state when the connection switching portion is in the connected state.

5. The tire vulcanizer according to Claim 4, wherein
the connection switching portion includes an electromagnet connectable to the state switching mechanism by magnetic force.
